# EUROPEAN PATENT APPLICATION

(11) **EP 4 369 039 A1**
(43) Date of publication of application: **15.05.2024**
(21) Application number: 22837514.3
(22) Date of filing: 24.06.2022
(51) Int. Cl.: G01S 15/931, G01S 7/52

(54) **OBJECT DETECTION DEVICE**

(30) Priority: 06.07.2021 JP 2021112223
(71) Applicant: AISIN CORPORATION, Kariya-shi, Aichi 448-8650 (JP)
(72) Inventor: SUGAE, Ippei, Kariya-shi, Aichi 448-8650 (JP); SASSA, Koichi, Kariya-shi, Aichi 448-8650 (JP); SHIBATA, Naoki, Kariya-shi, Aichi 448-8650 (JP)
(74) Representative: TBK
(86) International application number: PCT/JP2022/025401
(87) International publication number: WO 2023/282097

(57) **Abstract**

An object detection device is mounted on a moving body and detects an object that exists around the moving body, the object detection device including a transceiver that transmits a transmission wave and receives a reception wave generated by the transmission wave being reflected by the object, and a deviation detector that detects a deviation of the transceiver from a normal position that is a predetermined mounting position of the transceiver on the basis of echo information indicating a temporal change in intensity of the reception wave and reference echo information stored in a storage device in advance.

## Description

### TECHNICAL FIELD

The present disclosure relates to an object detection device.

### BACKGROUND ART

In a vehicle control system and the like, there is used an object detection device that detects an object that exists around a vehicle by transmitting a transmission wave such as an ultrasonic wave from the vehicle and receiving a reception wave (reflected wave) generated by the transmission wave being reflected by the object. For example, Patent Literature 1 discloses a configuration in which an ultrasonic sensor and an impact sensor are used in combination in a device that detects collision of an object with a vehicle.

### CITATIONS LIST

### PATENT LITERATURE

Patent Literature 1: JP 2014-133478 A

### SUMMARY OF INVENTION

### TECHNICAL PROBLEMS

When an impact is applied to the vehicle on which the object detection device as described above is mounted, there is a possibility that a deviation of a transceiver that transmits and receives ultrasonic waves or the like occurs, and the object detection cannot be normally performed.

One of the problems to be solved by the present disclosure is to provide an object detection device capable of detecting a deviation of a transceiver.

### SOLUTIONS TO PROBLEMS

An object detection device as an example of the present disclosure is mounted on a moving body and detects an object that exists around the moving body, the object detection device including a transceiver that transmits a transmission wave and receives a reception wave generated by the transmission wave being reflected by the object, and a deviation detector that detects a deviation of the transceiver from a normal position that is a predetermined mounting position of the transceiver on the basis of echo information indicating a temporal change in intensity of the reception wave and reference echo information stored in a storage device in advance.

The configuration described above enables detection the deviation of the transceiver caused by an impact or the like on the moving body.

The deviation detector may detect the deviation when an impact on the moving body is detected.

As a result, it is possible to determine whether the object detection device normally operates when contact of an object with the moving body or the like occurs.

In addition, the deviation detector may detect the deviation when the moving body shifts from a stopped state to a driving state.

As a result, it is possible to detect the deviation of the transceiver generated by an impact applied during a stop.

The reference echo information may be echo information acquired when the transceiver is at the normal position.

It is therefore possible to detect the deviation of the transceiver without adding special equipment.

The reference echo information may include road surface information based on a reception wave from a road surface.

Since the distance between the transceiver and the road surface is substantially constant, the deviation of the transceiver can be accurately detected by using the road surface information corresponding to the normal position.

### BRIEF DESCRIPTION OF DRAWINGS

FIG. 1 is a top view illustrating an example of a configuration of a vehicle according to a first embodiment.
FIG. 2 is a block diagram illustrating an example of a hardware configuration of a vehicle control system according to an embodiment.
FIG. 3 is a block diagram illustrating an example of a functional configuration of an object detection device according to an embodiment.
FIG. 4 is a diagram for describing an outline of an obstacle detection method using a TOF.
FIG. 5 is a diagram illustrating an example of reference echo information according to an embodiment.
FIG. 6 is a diagram illustrating a comparative example of echo information after occurrence of deviation and reference echo information in an embodiment.
FIG. 7 is a flowchart illustrating an example of processing during detection of a deviation of a transceiver in an object detection device according to an embodiment.

### DESCRIPTION OF EMBODIMENTS

Hereinafter, embodiments of the present disclosure will be described with reference to the drawings. The configurations of the embodiments described below and the functions and effects brought about by the configurations are merely examples, and the present invention is not limited to the following description.

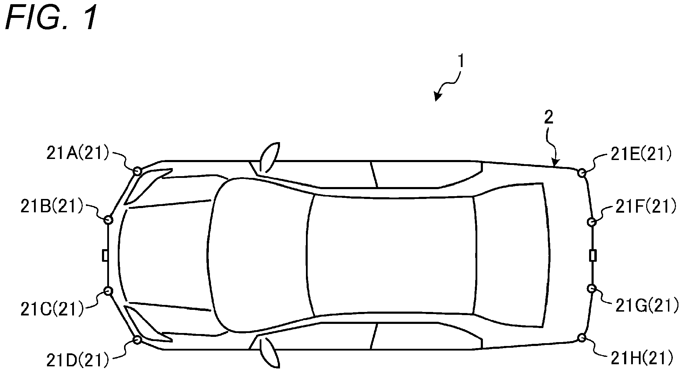

FIG. 1 is a top view illustrating an example of a configuration of a vehicle 1 according to an embodiment. The vehicle 1 is an example of a moving body on which an object detection device according to the present embodiment is mounted. The object detection device according to the present embodiment is a device that detects an object (another vehicle, structure, pedestrian, or the like) that exists around the vehicle 1 on the basis of information such as a time of flight (TOF) and a Doppler shift acquired by transmitting a transmission wave from the vehicle 1 and receiving a reception wave (reflected wave) generated by the transmission wave being reflected by the object.

The object detection device according to the present embodiment includes a plurality of transceivers 21A to 21H (which will be abbreviated as a transceiver 21 in a case where it is not necessary to distinguish the plurality of transceivers 21A to 21H.). Each of the transceivers 21 is installed in a vehicle body 2 as an exterior of the vehicle 1, transmits an ultrasonic wave (an example of a transmission wave) toward the outside of the vehicle body 2, and receives a reflected wave from an object existing outside the vehicle body 2 as a reception wave. In the example illustrated in FIG. 1, four transceivers 21A to 21D are arranged at a front end of the vehicle body 2, and four transceivers 21E to 21H are arranged at a rear end of the vehicle body 2. Note that the number and installation positions of the transceivers 21 are not limited to this example.

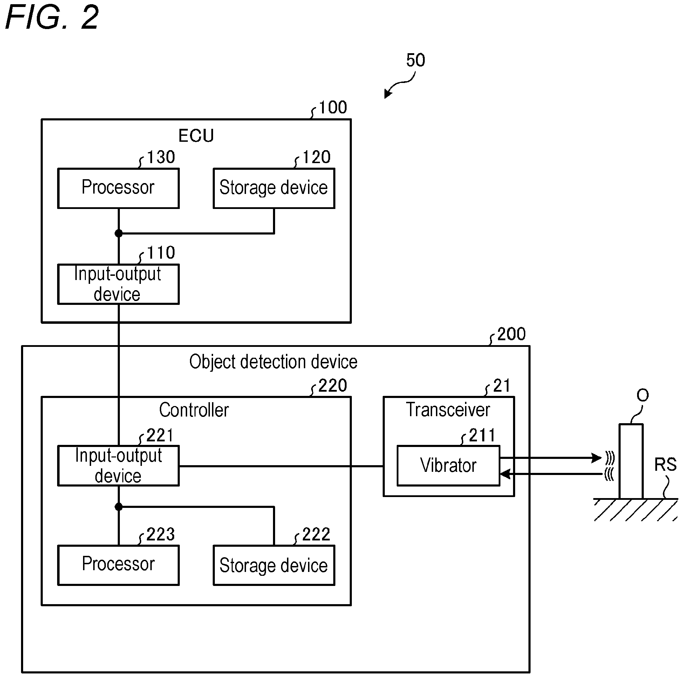

FIG. 2 is a block diagram illustrating an example of a hardware configuration of a vehicle control system 50 according to an embodiment. The vehicle control system 50 performs processing for controlling the vehicle 1 on the basis of information output from an object detection device 200. The vehicle control system 50 according to the present embodiment includes an ECU 100 and the object detection device 200.

The object detection device 200 includes the plurality of transceivers 21 and a controller 220. Each of the transceivers 21 includes a vibrator 211 configured by using a piezoelectric element or the like, an amplifier, and the like, and achieves transmission and reception of an ultrasonic wave by vibration of a vibrator 211. Specifically, each transceiver 21 transmits, as a transmission wave, an ultrasonic wave generated in response to the vibration of the vibrator 211, and detects the vibration of the vibrator 211 caused by a reflected wave (reception wave) of the transmission wave reflected by an object such as an obstacle O and a road surface RS. The vibration of the vibrator 211 is converted into an electric signal, and the TOF corresponding to a distance from the transceiver 21 to the obstacle O, Doppler shift information corresponding to a relative speed of the obstacle O, and the like can be acquired on the basis of the electric signal.

Note that, in the example illustrated in FIG. 2, a configuration in which both the transmission of the transmission wave and the reception of the reception wave are performed by using a single vibrator 211 is illustrated, but the configuration of the transceiver 21 is not limited to this configuration. For example, like a configuration in which a vibrator for transmitting a transmission wave and a vibrator for receiving a reception wave are separately provided, a transmission side and a reception side may be separated.

The controller 220 includes an input-output device 221, a storage device 222, and a processor 223. The input-output device 221 is an interface device that enables transmission and reception of information between the controller 220 and the outside (the transceiver 21, the ECU 100, and the like). The storage device 222 includes a main storage device such as a read only memory (ROM) and a random access memory (RAM), and an auxiliary storage device such as a hard disk drive (HDD) and a solid state drive (SSD). The processor 223 is an integrated circuit that executes various processing for implementing the functions of the controller 220, and can be configured by using, for example, a central processing unit (CPU) that operates in accordance with a program, an application specific integrated circuit (ASIC) designed for a specific application, or the like. The processor 223 executes various calculation processing and control processing by reading and executing a program stored in the storage device 222.

The ECU 100 is a unit that executes various processing for controlling the vehicle 1 on the basis of various types of information acquired from the object detection device 200 and the like. The ECU 100 includes an input-output device 110, a storage device 120, and a processor 130. The input-output device 110 is an interface device that enables transmission and reception of information between the ECU 100 and an external mechanism (the object detection device 200, a drive mechanism, a braking mechanism, a steering mechanism, a transmission mechanism, an in-vehicle display, a speaker, various sensors, and the like). The storage device 120 includes a main storage device such as a ROM and a RAM, and an auxiliary storage device such as an HDD and an SSD. The processor 130 is an integrated circuit that executes various processing for implementing the functions of the ECU 100, and can be configured by using, for example, a CPU, an ASIC, or the like. The processor 130 reads a program stored in the storage device 120 and executes various calculation processing and control processing.

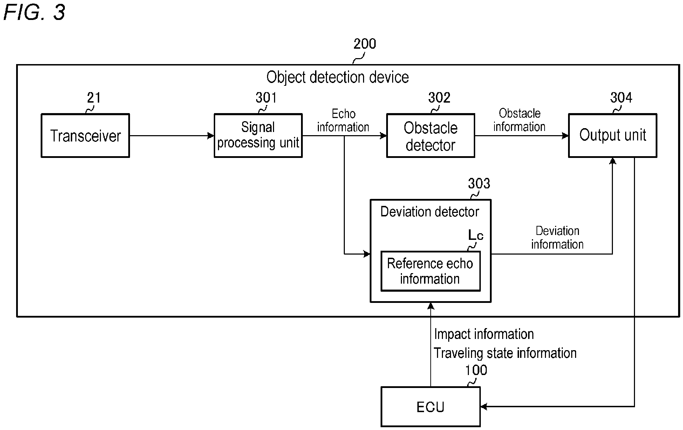

FIG. 3 is a block diagram illustrating an example of a functional configuration of the object detection device 200 according to an embodiment. The object detection device 200 according to the present embodiment includes a signal processing unit 301, an obstacle detector 302, a deviation detector 303, and an output unit 304. These functional components 301 to 304 can be implemented, for example, by cooperation of hardware components of the object detection device 200 illustrated in FIG. 2 and software components such as firmware and a program.

The signal processing unit 301 processes a signal acquired by the transceiver 21 and generates various data. The signal processing unit 301 performs, for example, amplification processing, filter processing, envelope processing, and the like on an electrical signal corresponding to vibration of the vibrator 211, and generates echo information indicating a temporal change in intensity (signal level) of the ultrasonic wave transmitted and received by the transceiver 21. A TOF corresponding to an obj ect existing around the vehicle 1 can be detected on the basis of the echo information, and a distance from the vehicle 1 (the transceiver 21) to the object can be calculated.

The obstacle detector 302 detects the obstacle O (for example, another vehicle, structure, pedestrian, or the like) existing around the vehicle 1 on the basis of the echo information or the like generated by the signal processing unit 301, and generates obstacle information related to the obstacle O. The obstacle information can include, for example, the distance from the vehicle 1 to the obstacle O, the relative speed of the obstacle O, a moving direction of the obstacle O, a type of the obstacle O, and the like.

The deviation detector 303 detects a deviation of the transceiver 21 from a normal position, which is a predetermined mounting position of the transceiver 21, on the basis of echo information generated by the signal processing unit 301 and reference echo information prepared in advance, and generates deviation information related to a deviation of the transceiver 21. The reference echo information is echo information acquired when the transceiver 21 is at the normal position, and preferably includes road surface information based on the reception wave from the road surface RS. The road surface information can include, for example, a TOF indicating a distance from the transceiver 21 at the normal position to the road surface, an intensity of the reception wave corresponding to the TOF, and the like. For example, the reference echo information may be stored in advance in the storage device 222, 120 or the like in FIG. 2, or may be updated in accordance with traveling, stop, or the like of the vehicle 1. In a case where a predetermined start condition is satisfied, the deviation detector 303 executes processing for detecting the deviation of the transceiver 21 and generates the deviation information. The start condition can be, for example, a case where an impact on the vehicle is detected, a case where the vehicle 1 shifts from a stopped state to a driving state, or the like. Such a function of the deviation detector 303 allows detection of a deviation of the transceiver 21 due to contact of an object with the vehicle 1, vibration of the vehicle 1, and the like.

The output unit 304 outputs the obstacle information generated by the obstacle detector 302 and the deviation information generated by the deviation detector 303 to a predetermined mechanism (such as the ECU 100). The obstacle information and the deviation information output from the output unit 304 can be used for various control such as danger avoidance control of the vehicle 1.

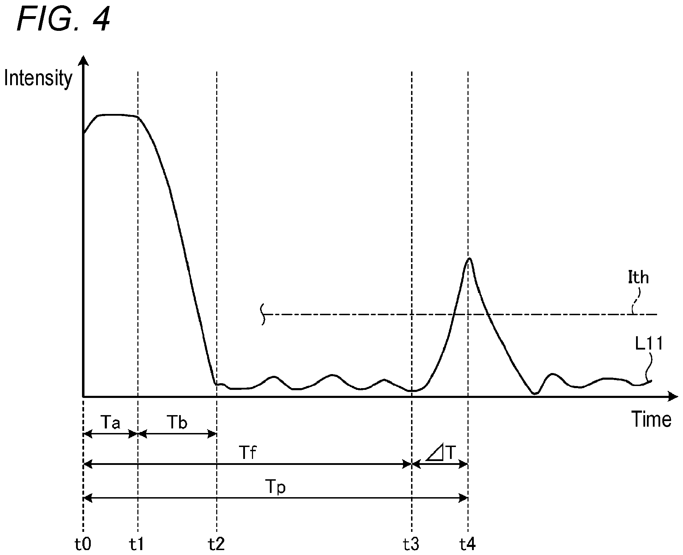

FIG. 4 is a diagram for describing an outline of an obstacle detection method using the TOF. FIG. 4 illustrates an envelope L11 (an example of the echo information) indicating a temporal change in intensity of the ultrasonic wave transmitted and received by the transceiver 21. In the graph illustrated in FIG. 4, the horizontal axis corresponds to time (TOF), and the vertical axis corresponds to the intensity of ultrasonic waves transmitted and received by the transceiver 21 (a magnitude of the vibration of the vibrator 211).

The envelope L11 indicates a temporal change in intensity indicating the magnitude of the vibration of the vibrator 211. From the envelope L11 illustrated in FIG. 4, it can be understood that the vibrator 211 is driven from timing t0 by time Ta and vibrates, so that the vibration of the vibrator 211 due to inertia continues while being attenuated during time Tb until the transmission of the transmission wave is completed at timing t1 and then reaches timing t2. Therefore, in the graph illustrated in FIG. 4, time Tb corresponds to a so-called reverberation time.

The envelope L11 reaches a peak at which the magnitude of the vibration of the vibrator 211 becomes equal to or greater than a detection threshold value Ith at timing t4 after a lapse of time Tp from timing t0 at which the transmission of the transmission wave is started. The detection threshold value Ith is a value set to identify whether the vibration of the vibrator 211 is caused by reception of the reception wave from the obstacle O (another vehicle, structure, pedestrian, or the like) or by reception of a reception wave from an object other than the obstacle O (for example, the road surface RS). Here, the detection threshold value Ith is illustrated as a constant value, but the detection threshold value Ith may be a variation value that changes in accordance with a situation. Vibration having a peak equal to or greater than the detection threshold value Ith can be regarded as being caused by reception of the reception wave from the obstacle O.

The envelope L11 in this example indicates that the vibration of the vibrator 211 is attenuated after timing t4. Therefore, timing t4 corresponds to a timing at which the reception of the reception wave from the obstacle O is completed, in other words, a timing at which the transmission wave transmitted last at timing t1 returns as a reception wave.

In the envelope L11, timing t3 as a start point of the peak at timing t4 corresponds to a timing at which reception of the reception wave from the obstacle O starts, in other words, a timing at which the transmission wave first transmitted at timing t0 returns as a reception wave. Therefore, time ΔT between timing t3 and timing t4 is equal to time Ta as a transmission time of the transmission wave.

From the above, in order to obtain the distance from a transmission-reception source (the transceiver 21) of the ultrasonic wave to the obstacle O by using the TOF, it is necessary to obtain time Tf between timing t0 at which the transmission wave starts to be transmitted and timing t3 at which the reception wave starts to be received. Time Tf can be obtained by subtracting time ΔT equal to time Ta as the transmission time of the transmission wave from time Tp as a difference between timing t0 and timing t4 at which the intensity of the reception wave reaches a peak exceeding the detection threshold value Ith.

Timing t0 at which the transmission wave starts to be transmitted can be easily specified as a timing at which the object detection device 200 starts an operation, and time Ta as the transmission time of the transmission wave is determined in advance by setting or the like. Therefore, the distance from the transmission-reception source to the obstacle O can be obtained by specifying timing t4 at which the intensity of the reception wave reaches a peak equal to or greater than the detection threshold value Ith.

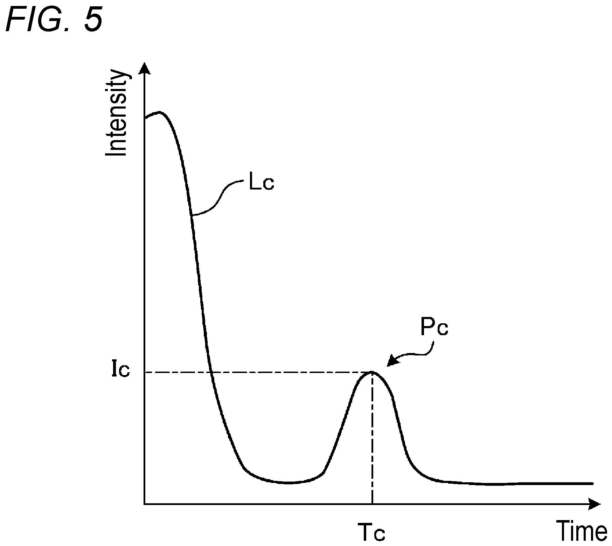

FIG. 5 is a diagram illustrating an example of reference echo information Lc according to an embodiment. The reference echo information Lc according to the present embodiment is echo information acquired when the transceiver 21 is at the normal position, and includes a reference peak Pc corresponding to a reception wave from the road surface RS received when the transceiver 21 is at the normal position. The reference peak Pc indicates reference time Tc which is a TOF corresponding to a distance from the transceiver 21 at the normal position to the road surface, and a reference intensity Ic which is an intensity of the reception wave measured at reference time Tc.

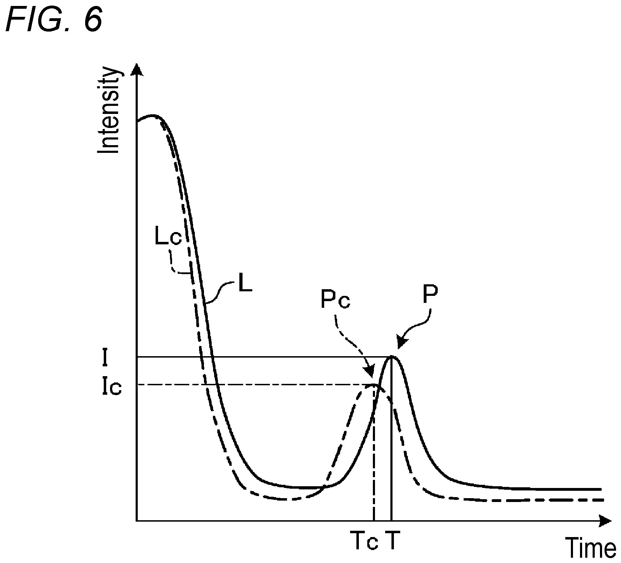

FIG. 6 is a diagram illustrating a comparative example of echo information L after occurrence of deviation and the reference echo information Lc in an embodiment. When a deviation occurs in the transceiver 21 due to an impact or the like on the vehicle 1, an error occurs between a peak P in the echo information L and the reference peak Pc as illustrated in FIG. 6. For example, in a case where at least one of an error between time T of the peak P and the reference time Tc and an error between an intensity I of the peak P and the reference intensity Ic is a predetermined value or more, it can be determined that a deviation has occurred in the transceiver 21. Note that a method of comparing the echo information with the reference echo information is not limited to the method described above.

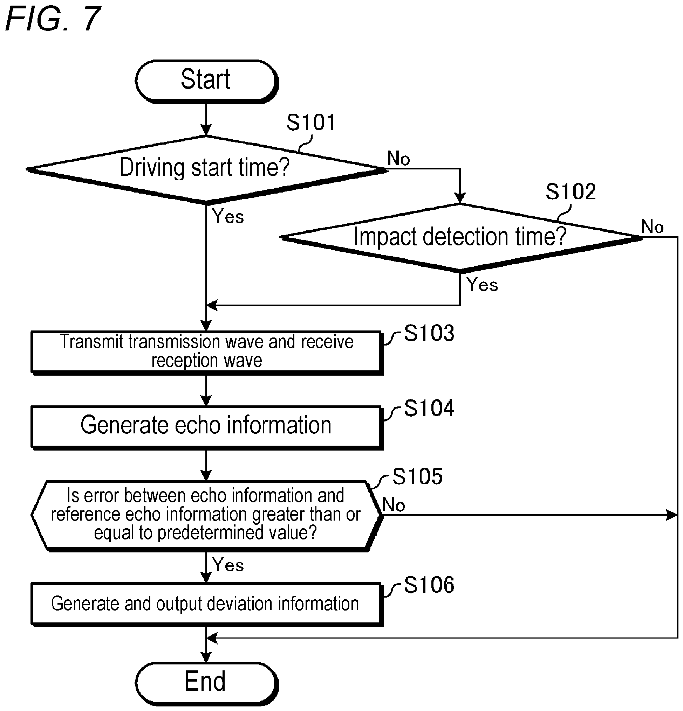

FIG. 7 is a flowchart illustrating an example of processing during detection of a deviation of the transceiver 21 in the object detection device 200 according to an embodiment. The deviation detector 303 determines whether it is a driving start time when the vehicle 1 shifts from the stopped state to the driving state on the basis of traveling state information acquired from the ECU 100 or the like (S101). When it is the driving start time (S101: Yes), the transceiver 21 transmits a transmission wave and receives a reception wave (S103), and the signal processing unit 301 generates the echo information L (S104). When it is not the driving start time (S101: No), the deviation detector 303 determines whether an impact on the vehicle 1 has been detected on the basis of impact information (such as output of an acceleration sensor, for example) acquired from the ECU 100 or the like (S102). When an impact on the vehicle 1 is detected (S102: Yes), steps S103 and S104 are executed, and when no impact on the vehicle 1 is detected (S102: No), this routine ends.

After the echo information L is generated in step S104, the deviation detector 303 compares the echo information L with the reference echo information Lc, and determines whether an error between the echo information L and the reference echo information Lc (for example, an error between the peak P and the reference peak Pc) is a predetermined value or more (S105). When the error between the echo information L and the reference echo information Lc is the predetermined value or more (S105: Yes), the deviation detector 303 generates deviation information indicating that a deviation has occurred in the transceiver 21, and the output unit 304 outputs the deviation information to the ECU 100 or the like (S106). When the error between the echo information L and the reference echo information Lc is not equal to or greater than the predetermined value (S105: No), this routine ends.

The embodiments enable detection of a deviation of the transceiver 21 caused by a contact of the object with the vehicle 1 without adding special equipment.

A program for causing a computer (for example, the processor 223 of the controller 220, the processor 130 of the ECU 100, and the like) to execute processing for implementing various functions in the embodiments can be provided by being recorded in a computer-readable recording medium such as a compact disc (CD)-ROM, a flexible disk (FD), a CD-R (recordable), and a digital versatile disk (DVD) as a file in an installable format or an executable format. Alternatively, the program may be provided or distributed via a network such as the Internet.

Although the embodiments of the present disclosure have been described above, the embodiments and modifications of the embodiments are merely examples, and are not intended to limit the scope of the invention. The novel embodiments and modifications can be implemented in various forms, and various omissions, substitutions, and changes can be made without departing from the gist of the invention. The embodiments and modifications are included in the scope and gist of the invention, and are included in the invention described in the claims and the equivalent scope of the invention.

### REFERENCE SIGNS LIST

1: Vehicle, 2: Vehicle body, 21, 21A-21H: Transceiver, 50: Vehicle control system, 100: ECU, 110: Input-output device, 120: Storage device, 130: Processor, 200: Object detection device, 211: Vibrator, 220: Controller, 221: Input-output device, 222: Storage device, 223: Processor, 301: Signal processing unit, 302: Obstacle detector, 303: Deviation detector, 304: Output unit, L: Echo information, Lc: Reference echo information, Pc: Reference peak, Tc: Reference time, and Ic: Reference strength

## Claims

1. An object detection device that is mounted on a moving body and detects an object that exists around the moving body, the object detection device comprising:
a transceiver that transmits a transmission wave and receives a reception wave generated by the transmission wave being reflected by the object; and
a deviation detector that detects a deviation of the transceiver from a normal position that is a predetermined mounting position of the transceiver on a basis of echo information indicating a temporal change in intensity of the reception wave and reference echo information stored in a storage device in advance.

2. The object detection device according to claim 1, wherein
the deviation detector detects the deviation when an impact on the moving body is detected.

3. The object detection device according to claim 1 or 2, wherein
the deviation detector detects the deviation when the moving body shifts from a stopped state to a driving state.

4. The object detection device according to any one of claims 1 to 3, wherein
the reference echo information is the echo information acquired when the transceiver is at the normal position.

5. The object detection device according to claim 4, wherein
the reference echo information includes road surface information based on the reception wave from a road surface.
